Europäisches Patentamt

European Patent Office

Office européen des brevets

(11) Veröffentlichungsnummer: **0 086 262**
**A1**

(12) **EUROPÄISCHE PATENTANMELDUNG**

(21) Anmeldenummer: 82110629.1

(22) Anmeldetag: 18.11.82

(51) Int. Cl.³: **B 23 D 79/00,** B 23 K 20/08

(30) Priorität: 12.02.82 DE 3204997

(43) Veröffentlichungstag der Anmeldung: 24.08.83
Patentblatt 83/34

(84) Benannte Vertragsstaaten: DE FR GB IT

(71) Anmelder: **ROBERT BOSCH GMBH, Postfach 50,
D-7000 Stuttgart 1 (DE)**

(72) Erfinder: **Conrad, Hans-Jürgen, Ing. grad.,
Lessingstrasse 25, D-7255 Rutesheim (DE)**
Erfinder: **Drexel, Peter, Ing. grad., Plieningerstrasse 33,
D-7031 Steinenbronn (DE)**
Erfinder: **Kubeth, Helmut, Dr.-Ing., 3 Midford Garden,
Bangalore (IN)**
Erfinder: **Leisner, Ernst, Dipl.-Ing., Wettertalstrasse 4,
D-7257 Ditzingen (DE)**
Erfinder: **Schildhorn, Walter, Ing.grad., Tennhofer Weg 7,
D-7012 Fellbach-Oeffingen (DE)**
Erfinder: **Schwilk, Herbert, Ing.grad., Uhlbergweg 8/2,
D-7302 Ostfildern (DE)**
Erfinder: **Ulbricht, Wolfgang, Tübinger Strasse 82,
D-7146 Tamm (DE)**

(74) Vertreter: **Brommer, Hans Joachim, Dr.-Ing. et al,
Patentanwälte Dipl.-Ing. R. Lemcke Dr.-Ing. H.J.
Brommer Amalienstrasse 28 Postfach 4026,
D-7500 Karlsruhe 1 (DE)**

(54) Vorrichtung zur Behandlung von Werkstücken in einer Brennkammer.

(57) Es wird eine Vorrichtung vorgeschlagen, die zur Behandlung von Werkstücken mittels Temperatur- und Druckstößen durch Zünden eines Gasgemisches, insbesondere eine thermische Entgratanlage vorgeschlagen. Um die platzsparende Bauweise der sogenannten «C-Bauweise» zu kombinieren mit dem bezüglich Belastbarkeit höher beanspruchbaren «Portalsystem», wird der bisher innerhalb der Tragsäulen angeordnete Rundschalttisch um eine der Säulen herum angeordnet. Hierdurch können der Abstand der Säulen beträchtlich verringert, die Belastbarkeit erhöht und die Herstellungskosten gesenkt werden. Im übrigen ist der geringe Platzbedarf von Vorteil.

PATENTANWÄLTE
DIPL.-ING. R. LEMCKE
DR.-ING. H. J. BROMMER
AMALIENSTRASSE 28
7500 KARLSRUHE 1

0086262

R.17596

Robert Bosch GmbH, 7000 Stuttgart 1, Postfach 50

## Vorrichtung zur Behandlung von Werkstücken in einer Brennkammer

### Stand der Technik

Die Erfindung geht aus von einer Vorrichtung nach der Gattung des Hauptanspruchs. Die besonders in Bezug genommenen Maschinen zum thermischen Entgraten sind unter anderem durch die Anmelderin aus Anmeldungen und Veröffentlichungen bekanntgeworden. In der Praxis unterscheidet man prinzipiell zwischen zwei Typen von Maschinengestellen zum thermischen Entgraten. Bei der sogenannten "C-Bausweise" weist das Maschinengestell die Form des Buchstabens "C" auf, der Kraftfluß ist also offen. Der Arbeitszylinder der thermischen Entgratanlage befindet sich dann zwischen den offenen Schenkeln des C-förmigen Gestells. Diese Bauweise ist nur für kleinere Entgratkammergrößen geeignet, da das Maschinengestell unsymmetrisch ist und die hohen Belastungen beim Komprimieren und durch den Explosionsdruck nur von einer Säule aufgefangen werden können.
So ist es möglich, daß sich das C-förmige Maschinen-
Gestell bei Belastung um einige Millimeter aufweitet
und dementsprechend ungenau ist. Der Vorteil dieser Bauweise liegt jedoch in der geringen Größe bzw. geringem
Platzbedarf.

Ähnlich wie bei herkömmlichen Pressen verwendet man beim
thermischen Entgraten ebenfalls die sogenannte "Portalbauweise", d.h. die Entgratkammer ist zwischen zwei
Säulen mit Zugankern eingeschlossen. Durch die symmetrische Bauweise und den geschlossenen Kraftfluß können
wesentlich höhere Kräfte auf das Maschinengestellt
übertragen werden und demzufolge ist der Einsatz größerer
Entgratkammern möglich. Nachteilig ist jedoch die
größere und schwerere Bauweise.

Bei beiden zuvor genannten Anlagetypen wird unter anderem ein sogenannter Rundschalttisch verwendet, der eine
intermitierende Arbeitsweise der Entgratanlage erlaubt,
d. h. während die eine Station am Rundschalttisch beladen
wird, findet an einer anderen Station bereits ein Entgratvorgang statt. Hierdurch wird eine optimale und
wirtschaftliche Ausnutzung der Anlage erzielt, da diese
in relativ kurzen Taktzeiten arbeiten kann.

Die Kombination eines Rundschalttisches mit einer thermischen Entgratanlage benötigt jedoch bei der sogenannten
"Portalbauweise" relativ viel Platz, da der Rundschalttisch zwischen den Säulen des Maschinengestells angeordnet werden muß.

Vorteile der Erfindung

Die erfindungsgemäße Vorrichtung mit den kennzeichnenden Merkmalen des Hauptanspruchs hat demgegenüber den Vorteil, daß eine in der sogenannten Portalbauweise ausgeführte Anlage mit integriertem Rundschalttisch wesentlich kompakter ausgeführt werden kann. Der nunmehr notwendige Platzbedarf entspricht dem einer Anlage in sogenannter C-Bauweise, ohne die Nachteile der unexakteren Führung und niedrigeren Belastbarkeit in Kauf nehmen zu müssen. Vielmehr kann der Vorteil der symetrischen Ausbildung des Maschinengestells mit zwei Tragsäulen (höhere Belastbarkeit) kombiniert werden mit der platzsparenden Bauweise des sogenannten C-Gestells. Der Rundschalttisch mit seinen einzelnen Schließtellern braucht nicht mehr in seiner Gesamtheit zwischen den beiden Säulen des Gestells angeordnet zu werden, sondern nur die Hälfte oder weniger der Grundfläche des Rundschalttisches. Dementsprechend können die beiden Tragsäulen des Maschinengestells wesentlich enger zusammenrücken, was insgesamt auch eine vereinfachte Ausführung des Maschinenoberteils und -unterteils zur Folge hat. Durch die zusammengerückte, kompakte Bauweise des Maschinengestells können auch das Ober- und Unterteil vereinfacht ausgeführt werden, da auch geringere Biegemomente auftreten. Das gesamte Maschinengestell läßt sich demnach wesentlich kostengünstiger herstellen und kann platzsparender betrieben werden, ohne jedoch an der bisherigen Leistungsfähigkeit Einbußen hinnehmen zu müssen.

Die weiterhin in den Unteransprüchen aufgeführten Maßnahmen stellen vorteilhafte Weiterbildungen und Verbesserungen der erfindungsgemäßen Vorrichtung dar. Besonders vorteilhaft ist die symetrische Ausbildung der Erfindung dergestalt, daß die Symetrieachse des Maschinengestells zusammenfällt mit dem durch die Mitte der Teller laufenden Umkreis des Rundschalttisches. Hierdurch wird das Maschinengestell völlig symetrisch belastet und kann damit maximale Kräfte übertragen. Die im inneren Kreis des Rundschalttisches befindliche Säule des Maschinengestells
kann mehr oder weniger im Bereich der senkrechten Mittelachse des Rundschalttisches angeordnet sein.

Eine Ausgestaltung der Erfindung sieht vor, daß die Lagerung des Rundschalttisches mittels eines demontierbaren
Drahtwälzlagers erfolgt. In Ausgestaltung der Erfindung
wird dieses Drahtlager in an sich bekannter Weise aus
Kugeln oder Rollen hergestellt, welche auf vier Drähten umlaufen wobei jedoch jeder Draht einen auftrennbaren Kreis
bildet. Diese Ausführungsform hat den Vorteil, daß bei
einem Verschleiß oder einer Reparatur des Rundschalttisches die zentrale Säule nicht demontiert werden braucht,
da das Lager durch die umlaufenden, jedoch geteilten Drähte
zerlegbar ist. Bei einem Verschleiß müssen gegebenenfalls
die Drähte oder auch Kugeln oder Rollen ersetzt werden. Da
die Drähte bzw. auch der evtl. vorhandene Käfig nicht einen
geschlossenen Ring bilden, kann das Lager ohne Ausbau der
zentralen Säule ausgewechselt werden. Der Rundschalttisch
ist demnach um die zentrale Säule herumgebaut.

Die erfindungsgemäße Einrichtung ist selbstverständlich
nicht auf eine Anlage zum thermischen Entgraten von Werkstücken beschränkt, da eine derartige Anlage zahlreiche Anwenndungsgebiete hat. So kann mit der in der Beschreibung
näher dargestellten Anlage ebenso z. B. das "Retikulieren
von Schaumstoff" nach DE-Patent 1 504 096 durchgeführt werden. Maßgeblich ist der Bearbeitungsvorgang an einem Werkstück mittels eines explosiven Gasgemisches in einer abgeschlossenen Kammer.

Die erfindungsgemäße Einrichtung läßt sich auch weiterhin
im üblichen Pressenbau in Verbindung mit einem Rundschalttisch verwenden. Hier gelten die gleichen zuvor beschriebenen Vorteile, wobei als Arbeitsvorgang an die Stelle des
z. B. thermischen Entgratens ein Preßvorgang, Stanzvorgang oder dergleichen durchgeführt wird.

Zeichnung

Ein Ausführungsbeispiel der Erfindung ist in der Zeichnung dargestellt und in der nachfolgenden Beschreibung näher erläutert. Es zeigen die

Fig. 1    einen Schnitt durch eine schematisch dargestellte Anlage zur Behandlung eines Werkstücks mittels eines explosiven Gasgemisches,

Fig. 2    eine nähere Darstellung des erfindungsgemäßen Drahtwälzlagers.

Beschreibung des Ausführungsbeispiels

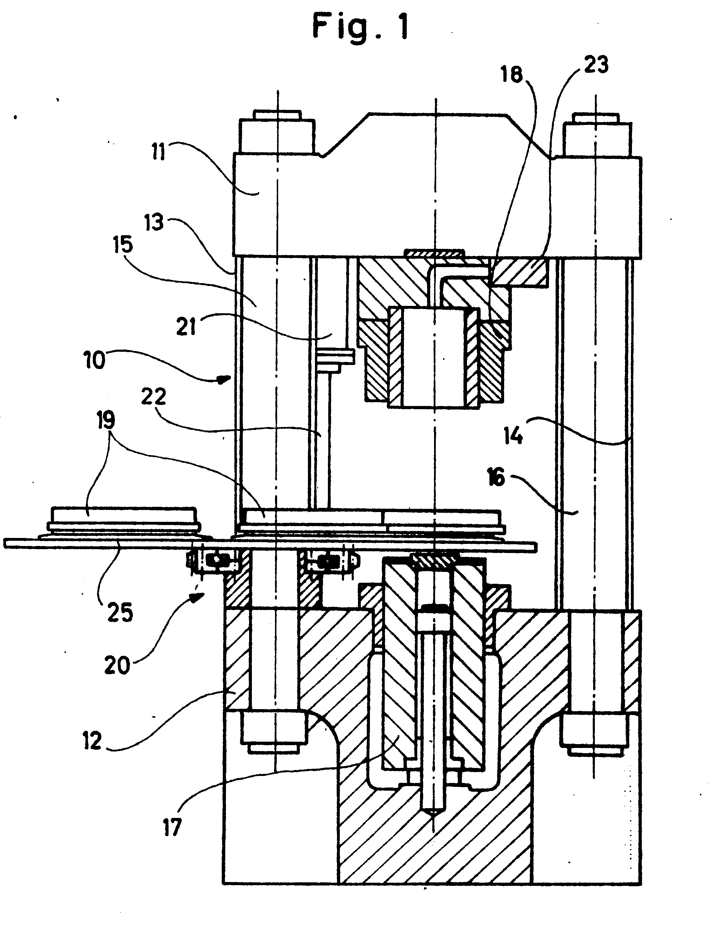

Die weitere Beschreibung bezieht sich auf eine Vorrichtung bzw. Anlage zum thermischen Entgraten. Die in der Fig. 1 dargestellte Vorrichtung ist in der sogenannten "Portalbauweise" hergestellt, d. h. das symetrisch aufgebaute Maschinengestell 10 besteht aus einem Oberteil 11 und einem Unterteil 12 die durch Säulen 13, 14 mit Zugankern 15, 16 verbunden sind. Das Maschinengestell nimmt die Entgratkammer-Schließkraft und die bei der Zündung wirksamen Kräfte mit elastischer Verformung auf. Ein hydraulisches Schließsystem 17 verschließt die am Oberteil 11 des Maschinengestells 10 befestigte Entgratkammer 18 hermetisch mit einem Schließteller 19 ab. Der Schließteller 19 wird aus dem Rundschalttisch 20 herausgeschoben und gegen die Entgratkammer 18 gedrückt. Der Rundschalttisch 20 trägt z. B. fünf derartige Schließteller 19 und taktet diese unter die Entgratkammer 18.

Die für die jeweilige Entgrataufgabe erforderliche Gasmenge (Brenngas und Sauerstoff) wird in zwei Gasdosierzylinder 21 abgemessen und hydraulisch mittels eines Gaseinstoßzylinders

0086262

22 in die Entgratkammer 18 eingestoßen. Ein vorgeschalteter Mischblock 23 dient der gleichmäßigen Vermischung und der Zündung des brennbaren Gemisches.

Bei der erfindungsgemäßen Vorrichtung ist der Rundschalttisch 20 nicht zwischen den Säulen 13, 14 sondern derart angeordnet, daß die Schließteller 19 des Rundschalttisches 20 die Säule 13 umlaufen. Hierdurch kann der Abstand zwischen den Säulen 13, 14 gegenüber herkömmlichen Anlagen erheblich verkleinert werden. Die Schließteller 19 werden von einem Bereich außerhalb des Maschinengestells in diesen hineingetaktet, um unterhalb der Entgratkammer 18 in Arbeitsstellung zu kommen. Je nach konstruktiven Gegebenheiten kann die sich innerhalb des Rundschalttisches 20 befindliche Säule 13 mehr oder weniger konzentrisch zum Rundschalttisch 20 angeordnet sein.

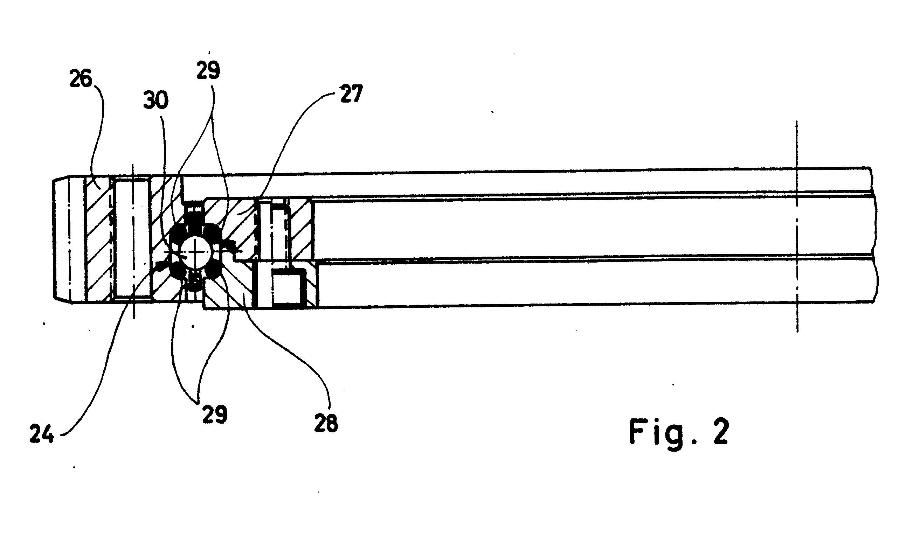

In Fig. 2 ist die erfindungsgemäße Ausbildung des Rundschalttisches 20 mit einem Drahtkugellager 24 dargestellt. Die Lagerung des mit der Tischplatte 25 des Rundschalttisches 20 verbundenen äußeren Käfigs 26 geschieht über das Drahtkugellager 24 und die feststehenden inneren Teile 27, 28 des Drahtkugellagers. Drahtwälzlager sind an sich bekannt (siehe Lueger Lexikon der Technik, Taschenbuchausgabe, Band 1, Seite 79). Die Besonderheit in der vorliegenden Konstruktion liegt jedoch in der Teilbarkeit des Drahtkugellagers 24, da die auf vier Drähten 29 umlaufenden Kugeln 30 ohne weiteres bei Verschleiß ausgewechselt werden können. Da die Drähte 29 keinen geschlossenen Ring bilden, was auch für die übrigen Teile des Käfigs zutrifft, kann das Kugellager und damit der Rundschalttisch demontiert werden, ohne daß die Säule 13 mit Zuganker 15 entfernt werden müßte. Dies erhöht den wirtschaftlichen Einsatz der Anlage beträchtlich.

Patentanwälte
Dipl.-Ing. R. Lemcke
Dr.-Ing. H.-J. Brommer
7. Karlsruhe 1
Amalienstraße 28
Postfach 40 26

0086262

R. 17596

Robert Bosch GmbH, 7000 Stuttgart 1, Postfach 50

Ansprüche

1. Vorrichtung zur Behandlung von Werkstücken mittels Temperatur- und Druckstößen durch Zündung eines Gases, wie thermische Entgratanlage, mit einem wenigstens zwei Säulen aufweisenden Maschinengestell und einem Rundschalttisch zur intermittierenden Bearbeitung von Werkstücken, dadurch gekennzeichnet, daß wenigstens eine Säule (13) vom Rundschalttisch (20) umgeben ist.

2. Vorrichtung nach Anspruch 1, dadurch gekennzeichnet, daß das Maschinengestell (10) zwei Säulen (13, 14) mit vorgespannten Zugankern (15, 16) ("Portalbauweise") aufweist, daß die Teller (19) des Rundschalttisches (20) um eine der Säulen (13) herum angeordnet sind und daß der durch die Mitte der Teller (19) laufende Umkreis des Rundschalttisches (20) mit der Symetrieachse des Maschinengestells (10) zusammenfällt.

3. Vorrichtung nach Anspruch 1 oder 2, dadurch gekennzeichnet, daß die Lagerung des Rundschalttisches (20) mittels eines demontierbaren Drahtwälzlagers (24) erfolgt.

4. Vorrichtung nach Anspruch 3, dadurch gekennzeichnet, daß die Kugeln oder Rollen des Drahtwälzlagers (24) auf vier Drähten (29) umlaufen, wobei jeder Draht (19) einen nicht geschlossenen Ring bildet.

5. Vorrichtung nach Anspruch 3 oder 4, dadurch gekennzeichnet, daß der Innenring des Wälzlagers aus zwei axial zusammenzufügenden Ringen (27, 28) besteht.

# Fig. 1

Fig. 2

Europäisches
Patentamt

EUROPÄISCHER RECHERCHENBERICHT

0086262

Nummer der Anmeldung

EP 82 11 0629

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 091 838 (CHEMOTRONICS) * Seite 4, Zeile 17 - Seite 13, Zeile 16; Figuren 1-4 * | 1 | B 23 D 79/00 B 23 K 20/08 |
| | --- | | |
| A | US-A-3 432 912 (AEROJET-GENERAL) * Spalte 2, Zeile 38 - Spalte 6, Zeile 16; Figuren 1-4 * | 1 | |
| | ----- | | |

RECHERCHIERTE
SACHGEBIETE (Int. Cl. 3)

B 23 D 79/00
B 23 K 20/00
C 21 D 1/00
B 22 D 29/00

Der vorliegende Recherchenbericht wurde für alle Patentansprüche erstellt.

| Recherchenort DEN HAAG | Abschlußdatum der Recherche 19-05-1983 | Prüfer DEMOLDER J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82